# EUROPEAN PATENT SPECIFICATION

(11) **EP 3 979 699 B1**
(45) Date of publication and mention of the grant of the patent: **13.08.2025**
(21) Application number: 20826460.6
(22) Date of filing: 03.06.2020
(51) Int. Cl.: H04W 76/19, H04W 36/02, H04W 36/00, H04W 76/16

(54) **DATA PROCESSING METHOD AND APPARATUS IN DUAL CONNECTIVITY RE-ESTABLISHMENT**
DATENVERARBEITUNGSVERFAHREN UND VORRICHTUNG BEI DER WIEDERHERSTELLUNG VON DUALER KONNEKTIVITÄT
PROCÉDÉ ET APPAREIL DE TRAITEMENT DE DONNÉES DANS LE RÉTABLISSEMENT D'UNE DOUBLE CONNECTIVITÉ

(30) Priority: 17.06.2019 CN 201910522919
(43) Date of publication of application: 06.04.2022
(73) Proprietor: ZTE Corporation, Shenzhen, Guangdong 518057 (CN)
(72) Inventor: WANG, Juntao, Shenzhen, Guangdong 518057 (CN); DU, Gaopeng, Shenzhen, Guangdong 518057 (CN)
(74) Representative: Novagraaf Technologies
(86) International application number: PCT/CN2020/094178
(87) International publication number: WO 2020/253536

(56) References cited:
- EP-A1- 2 393 322
- CN-A- 102 917 409
- CN-A- 107 277 874
- CN-A- 107 690 162
- US-A1- 2017 318 504
- US-A1- 2018 014 237
- ERICSSON: "When and how to support data forwarding for dual connectivity", vol. RAN WG3, no. San Jose del Cabo, Mexico; 20140331 - 20140404, 30 March 2014 (2014-03-30), XP050795506, Retrieved from the Internet <URL:http://www.3gpp.org/ftp/Meetings_3GPP_SYNC/RAN3/Docs/> [retrieved on 20140330]
- "3rd Generation Partnership Project; Technical Specification Group Radio Access Network; Evolved Universal Terrestrial Radio Access (E-UTRA); Radio Resource Control (RRC); Protocol specification (Release 15)", 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.5.0, 4 April 2019 (2019-04-04), pages 1 - 948, XP051723301

## Description

### TECHNICAL FIELD

The present disclosure relates to the field of communication technology, and in particular to a data processing method and apparatus in dual connectivity re-establishment.

### BACKGROUND

Multiple radio access technology dual connectivity (MR-DC) is introduced in RI 5 for network establishment by dual connectivity. A dual connectivity technology sufficiently applies radio air interface resources of different stations (that have the same or different standards) to improve a user's experience in terms of communication speed. Through macro/micro network establishment, efficiency of frequency spectrum and load balance are improved, and a terminal capable of supporting dual connectivity may be simultaneously connected to two long term evolution (LTE) / new radio (NR) base stations to increase throughput for a single user. However, once reconfiguration of radio air interface fails, a packet losing in service would be caused. In response to this, packet losing in service shall be reduced as much as possible at a network side to ensure experience of the service.

In a process of dual connectivity service, due to failure of a downlink air interface, a reestablishment process may be triggered by a user equipment (UE). Herein, the reestablishment process includes: a common reestablishment and a reestablishment in a switching process. A difference between the common reestablishment and the reestablishment in the switching process lies in whether there is a switching process in the reestablishment process. If there is a switching process in the reestablishment process, the establishment is the reestablishment in the switching process. Otherwise, the establishment is the common reestablishment. However, in a related art, backhaul of data already occurs before a reestablishment. Currently, there is not an effective solution to a problem of how to control performing of re-backhaul of data after the reestablishment.
The related document (US2017/318504A1) discloses an apparatus an method for control of communication using dual-connectivity mode. The related document (EP2393322A1) discloses a mobile communication method and radio base station. The related document (3GPP TSG RAN WG3 Meeting #83bis-R3-140816) discloses a method of when and how to support data forwarding for dual connectivity.

### SUMMARY

Some embodiments of the present disclosure provide a data processing method, system and storage medium in dual connectivity re-establishment. The invention is set out in the appended claims.

### BRIEF DESCRIPTION OF THE DRAWINGS

The drawings provide further understanding on the present disclosure and form a part of the present disclosure. The schematic embodiments presented in the present disclosure and the description thereof are intended to describe the present disclosure, rather than to limit the present disclosure. In the drawings:
FIG. 1 is a flowchart showing a data processing method in dual connectivity re-establishment according to the embodiments of the present disclosure.
FIG. 2 is a schematic diagram showing a data caching mechanism according to the embodiments of the present disclosure.
FIG. 3 is a schematic diagram showing a backhaul of data in a common dual connectivity re-establishment according to the embodiments of the present disclosure.
FIG. 4 is a schematic diagram showing a backhaul of data in a dual connectivity adding process according to the embodiments of the present disclosure.
FIG. 5 shows a backhaul of data in a dual connectivity switching process according to the embodiments of the present disclosure.
FIG. 6 is a schematic diagram showing a data path during a switching in a MN with a same SN according to the embodiments of the present disclosure.
FIG. 7 is a schematic diagram showing a path of backhaul of data in a mobility switching process in the MN according to the embodiments of the present disclosure.
FIG. 8 is a schematic diagram showing a flow of backhaul of data in a mobility switching process in the MN according to the embodiments of the present disclosure.
FIG. 9 is a schematic diagram showing a path of backhaul of data in a mobility switching process between MNs according to the embodiments of the present disclosure.
FIG. 10 is a schematic diagram showing a flow of backhaul of data in a mobility switching process between the MNs according to the embodiments of the present disclosure.
FIG. 11 is a schematic diagram showing a path of backhaul of data in a mobility switching process between a master eNodeB (MeNB) and an eNodeB (eNB) according to the embodiments of the present disclosure.
FIG. 12 is a schematic diagram showing a flow of backhaul of data in a mobility switching process between a MeNB and an eNB according to the embodiments of the present disclosure.
FIG. 13 is a schematic diagram showing a path of backhaul of data in a mobility switching process between an eNB and a MeNB according to the embodiments of the present disclosure.
FIG. 14 is a schematic diagram showing a flow of backhaul of data in a mobility switching process between an eNB and a MeNB according to the embodiments of the present disclosure.
FIG. 15 is a structural block diagram showing a data processing apparatus used in dual connectivity re-establishment according to the embodiments of the present disclosure.
FIG. 16 is a schematic diagram showing an electronic apparatus according to the embodiments of the present disclosure.

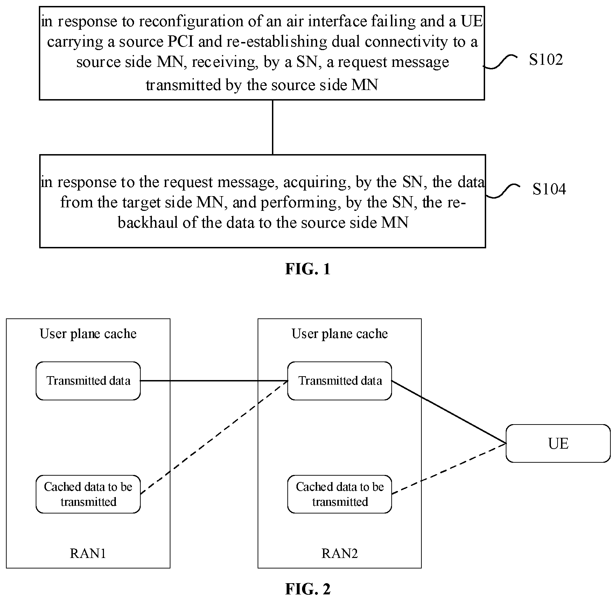

Figs. 1, 9 and 10 are covered by the claims.

### DETAILED DESCRIPTION

The present disclosure is described in detail with reference to the embodiments and the drawings. It shall be noted that without conflict, the embodiments and features in the embodiments may be combined with each other.

In a scenario of network establishment using dual connectivity, a re-establishment flow is triggered during an establishment of dual connectivity by a UE, in particular when a reconfiguration of an air interface fails in the establishment process of the dual connectivity or a reconfiguration of the air interface fails in a mobility switching process. However, according to a flow in a current standard protocol, it is not able to instruct a base station to perform a re-backhaul of data, nor a target side is able to determine and identify a path for backhaul, resulting in data packet losing. Mobility in a current fourth generation (4G) or fifth generation (5G) standard is applied between two stations, thus there is no problem of failing to identify the path for backhaul of data. While on the dual connectivity bearer in 4G and 5G, there may be two or more base station entities performing backhaul of data, that increases difficulty in identifying a path for backhaul. The embodiments of the present disclosure may reduce packet losing during re-establishment and guarantee service experience of a user during dual connectivity.

### Embodiment 1

An embodiment of the present disclosure provides a data processing method in dual connectivity re-establishment. FIG. 1 is a flowchart showing a data processing method in dual connectivity re-establishment according to the embodiments of the present disclosure. As shown in FIG. 1, the flow includes the following operations.

In S102, in response to reconfiguration of an air interface failing and a UE carrying a source PCI and re-establishing dual connectivity to a source side MN, an SN receives a request message transmitted by the source side MN. Herein, the request message is configured for instructing the SN to perform a re-backhaul of data, which is transmitted to a target side MN by the source side MN through a backhaul, to the source side MN.

In S104, in response to the request message, the SN acquires the data from the target side MN, and performs the re-backhaul of the data to the source side MN.

With the operations S102 and S104, in response to reconfiguration of an air interface failing and a UE carrying a source PCI and re-establishing dual connectivity to a source side MN, an SN receives a request message transmitted by the source side MN. The request message is configured for instructing the SN to perform a re-backhaul of data, which is transmitted to a target side MN by the source side MN through a backhaul, to the source side MN. In response to the request message, the SN acquires the data from the target side MN, and performs the re-backhaul of the data to the source side MN. In this way, the problem of lacking a control method for re-backhaul of data after the reestablishment in the related art is addressed, thereby packet losing in user data is reduced and continuity of backhaul of data is guaranteed.

It shall be noted that the application scenario of dual connectivity involved in the present disclosure includes but not limited to EN-DC, NE-DC, NGEN-DC and NR-DC. Alternatively, the dual connectivity may be applied to other fields of a communication system. Herein, E denotes EUTRA, i.e., a 4G radio access network. N denotes NR, i.e., a 5G new radio network. NG denotes a next generation network, supporting an eNB linking to a 5G core network (5GC), i.e., ng-eNB. Therefore, EN-DC refers to a dual connectivity of a 4G radio access network and a 5G NR. NE-DC refers to a dual connectivity of the 5G NR and the 4G radio access network. NGEN-DC refers to a dual connectivity of the 4G radio access network linking to the 5G core network and the 5G NR. NR-DC refers to a dual connectivity of a 5G radio access network and a 5G radio access network.

In addition, the data involved in the present disclosure is pre-cached data. Herein, the pre-cached data includes data cached between radio access networks and/or data cached between a radio access network and a UE.

Due to the characteristic of radio air interfaces, failure may occur at any time. By storing data in a re-establishment scenario, a rollback in a failure flow can be performed, and a re-backhaul of data can be performed. In this way, interruption in a service on a radio side can be reduced as much as possible. As shown in FIG. 2, data cache includes two aspects: data cache between radio access networks (RAN (radio access network)1->RAN2), and data cache between a radio access network and a UE. The data cache is configured to cache as large quantity of data as possible.

It shall be noted that the RAN1 may be an eNB, a gNB, or a ng-eNB.

In an alternative implementation of Embodiment 1, before the reconfiguration of the air interface fails, the method further includes a backhaul of data. This backhaul of data is used in the following three application scenarios.

In an application scenario 1, the backhaul of data is used in a common dual connectivity re-establishment. The process includes the following operations.

In S1, UE is triggered to establish bearer of a dual-connectivity service.

In S2, after the air interface triggers re-establishment of the dual connectivity, the SN is deleted, and the backhaul of data is performed from the SN to the source side MN.

In S3, after re-establishment of the dual-connectivity service, the SN is re-added.

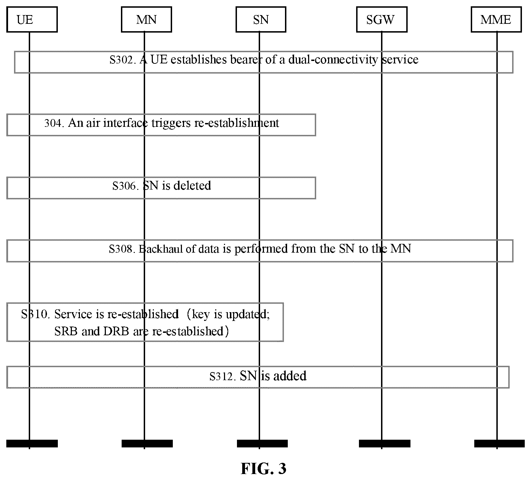

That is, bearer of a common dual connectivity mainly refers to: the user has already established bearer of the dual connectivity, but a radio resource control (RRC) re-establishment is triggered by the air interface. At this time, the SN shall be deleted by a network side to restore SRB1 of a PCell and to reactivate safety mode. And backhaul of the data shall be performed to the MN in response to the deletion of the SN. As shown in FIG. 3, a process of the backhaul of the data in the common dual connectivity re-establishment includes the following.

In S302, the UE establishes bearer of a dual-connectivity service.

In S304, an air interface triggers re-establishment of the dual connectivity.

In S306, the SN is deleted.

In S308, backhaul of the data is performed from the SN to the MN.

In S310, the dual-connectivity service is re-established.

In S312, the SN is re-added.

In an application scenario 2, the backhaul of data is used in a dual connectivity adding process. This process includes the following operations.

In S1, a base station is triggered to establish a dual-connectivity service, and the source side MN is triggered to add the SN.

In S2, backhaul of the data is performed from the source side MN to the SN.

In S3, after triggering re-establishment of the dual-connectivity to the target side MN in processes of the reconfiguration of the air interface and adding of the SN, the SN is deleted and backhaul of the data is performed from the SN to the target side MN.

In S4, the SN is re-added after re-establishment of the dual-connectivity service.

It shall be noted that in a process of adding the SN and deleting the SN, if a packet data convergence protocol (PDCP) anchor migrates, backhaul of data from the source side to the target side has to be performed to guarantee continuity of service data, until the core network is notified of updating a changed downlink address and downlink data is valid at the target side. Scenarios of data backhaul of node based on Master cell group (MCG) bearer, secondary cell group (SCG) bearer and Split bearer include:
within a MN terminated bearer;
within a SN terminated bearer; and
between the MN terminated bearer and the SN terminated bearer.

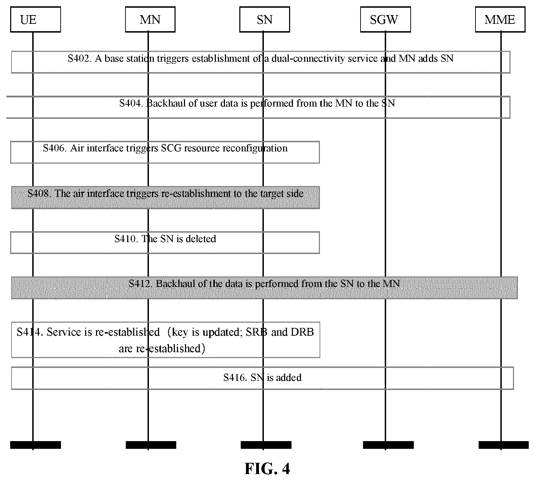

Therefore, re-establishment during the adding of the SN refers to: in a process of the base station performing dual connectivity configuration on the UE, the base station has already performed backhaul of data to the SN; but in a process of air interface configuration for SCG going into operation, UE triggers service re-establishment. In this case, backhaul of data has to be performed from the SN to the MN. The MN restores SRB1 of a PCell and reactivates safety mode. And backhaul of the data shall be performed to the MN in response to the deletion of the SN. As shown in FIG. 4, a process of data backhaul in the dual connectivity adding process includes the following.

In S402, the base station is triggered to establish a dual-connectivity service and the MN is triggered to add the SN.

In S404, backhaul of the user data is performed from the MN to the SN.

In S406, the air interface triggers reconfiguration of SCG resource.

In S408, the air interface triggers re-establishment to the target side.

In S410, the SN is deleted.

In S412, backhaul of the data is performed from the SN to the MN.

In S414, the service is re-established.

In S416, the SN is added.

In an application scenario 3, backhaul of data is used in a dual connectivity switching process. This process includes the following operations.

In S1, the UE is triggered to establish a dual-connectivity service.

In S2, after the air interface triggers a mobility switching, the SN is deleted, and backhaul of the data is performed from the SN to the target side MN.

In S3, after the air interface triggers re-establishment to the target side, the SN is re-added in response to re-establishment of the dual-connectivity service being complete.

The process of data backhaul in the dual connectivity switching process refers to: the user establishes bearer of a dual connectivity, but mobility switching is triggered due to some reason, and an air interface reconfiguration message and configuration information of the target side bearer is transmitted. It indicates that the reconfiguration of the air interface fails by receiving a re-establishment request message before receiving a reconfiguration completion message by the target side. A re-establishment process in the switching process includes three types: a re-establishment to the target side, a re-establishment to the source side, and a re-establishment to a third-party cell.

It indicates that air interface configuration resources of the UE and a target side cell is valid when the re-establishment request carries PCI of the target side cell. In this case, the service can be re-established at the target side and the re-establishment to the target side would not cause packet losing of data, because backhaul of data has been performed to the target side.

It indicates that configuration of the air interface fails at the UE and the target side when a re-establishment request carries PCI of a source side cell, and it is necessary to re-establish a service at the source side. In a scenario where backhaul has been performed, there is no appropriate timing in related art to trigger re-backhaul of data from the target side to the source side. Therefore, in this scenario, packet losing of the service would occurs without backhaul of data, and the user experience would be impacted.

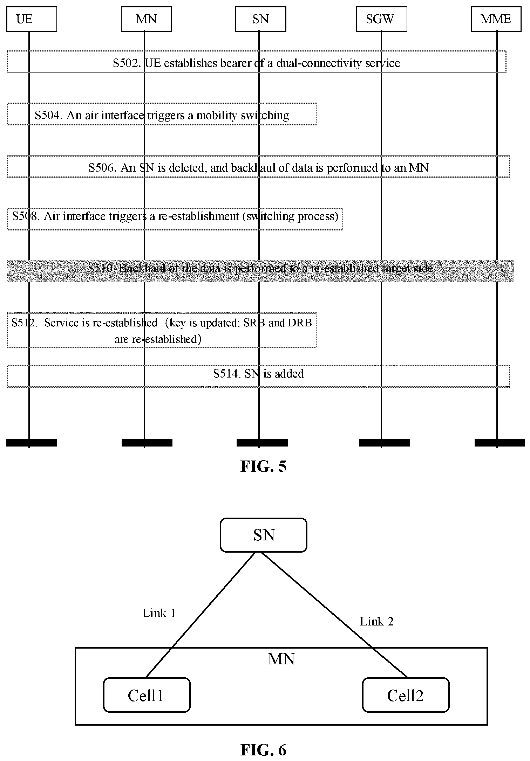

As shown in FIG. 5, a method for data backhaul in the dual connectivity switching process includes the following operations.

In S502, the UE establishes bearer of a dual-connectivity service.

In S504, the air interface triggers a mobility switching.

In S506, an SN is deleted, and backhaul of data is performed to an MN.

In S508, the air interface triggers re-establishment.

In S510, backhaul of the data is performed to a re-established target side.

In S512, the service is re-established.

In S514, the SN is added.

FIG. 6 shows a data path during switching in a MN with a same SN. Herein, a key point of backhaul of data lies in a process of backhaul of data and a target resource releasing during re-establishment. The process mainly includes the following.

In S1, the MN notifies the SN of reconfiguring the re-establishment triggered by failure, and the SN performs rollback to invalidate new configuration and use old configuration.

In S2, the SN makes backup of received backhaul data.

In S3, after the SN identifies a re-establishment scenario, the SN performs backhaul of the data to the source side, and then releases the resource.

In the following, the present disclosure is described exemplarily through an alternative implementation of the present disclosure. In this alternative implementation, a switching with a same SN in an EN-DC scenario is taken as an example, and the backhaul of data in other dual connectivity scenarios are processed in the same way. When re-establishment of a dual connectivity based on SN terminated bearer is triggered, scenarios of re-backhaul of data from a same SN failing mainly include:
1) mobility switching in an MN while a target SN stays unchanged;
2) mobility switching between MNs while the target SN stays unchanged;

The protocol defines the mobility switching process with a same SN, and the process may be modified by triggering the SN. However, in an SN dual connectivity process, a service bearer is at the level of data resource bearer (DRB), rather than the level of a link. During a triggering and switching process, the SN modifies the process and a target MN establishes new bearers while original bearers are retained and backhaul of data is performed from a source side bearer to a target side at the level of DRB. In response to failure being triggered by an air interface, the MN requires the SN performing modification and backhaul of data again. However, links between the SN and two MNs are kept simultaneously, Thus the SN fails to distinguish a target link from a source link. The SN is not able to determine how to perform backhaul of data.

Therefore, in this alternative implementation, identification for backhaul of data in a re-establishment process is provided. That is, the SN modifies a request message and adds a re-establishment link identifier and a backhaul address in the request message. After identifying a re-establishment scenario, the SN performs rollback for resource failure and re-backhaul of the backhaul data received by the target SN to the source side. That is, during the dual connectivity re-establishment, a data link identifier for backhaul is transmitted between access network elements.

Re-establishment identifier cells which are added by modifying messages by the SN are shown in Table 1:

**Table 1**

| **IE/Group Name** | **Presence** | **IE type and reference** | **Semantics description** | **Criticali ty** | **Assigned Criticality** |
|---|---|---|---|---|---|
| Message Type | M | | | YES | reject |
| MN UE AP ID | M | | Allocated at the MN. | YES | reject |
| SN UE AP ID | M | | Allocated at the SN | YES | reject |
| Re-establishment in MN | O | ENUMERATED (true, ...) | Indicates target SN that forwarding the data to source node and Release source | YES | ignore |

Re-establishment identifier cells which are added by releasing messages by the SN are shown in Table 2:

**Table 2**

| **IE/Group Name** | **Presence** | **IE type and reference** | **Semantics description** | **Criticali ty** | **Assigned Criticality** |
|---|---|---|---|---|---|
| Message Type | M | | | YES | reject |
| MN UE AP ID | M | | Allocated at the MN. | YES | reject |
| SN UE AP ID | M | | Allocated at the SN | YES | reject |
| Re-establishment in MN | O | ENUMERATED (true, ...) | Indicates target SN that forwarding the data to source node and Release source | YES | ignore |

It shall be noted that a cell indication with other message names but having the same function and objective is processed in the same way.

A re-establishment process with a switching process in an MN is as follows.

**In** a scenario of switching in the MN, during the switching process, backhaul of user data has been performed from a Cell1 (within MN1) to a Cell2 (within MN1). In a scenario where an air interface service fails, a UE performs, carrying a source PCI, re-establishment to the source side Cell1, because a network side needs to establish a service at the source side. The backhaul data transmitted to the Cell2 has to be retransmitted to the Cell1 to reduce packet losing of the data. Solutions include the following.

**In** solution 1, during a mobility switching process, Cell1(MN1) stores two copies of data. When a failure occurs during switching, and re-establishment is performed to the source side, the cached data can be used to restore user service data, without performing backhaul by the target side.

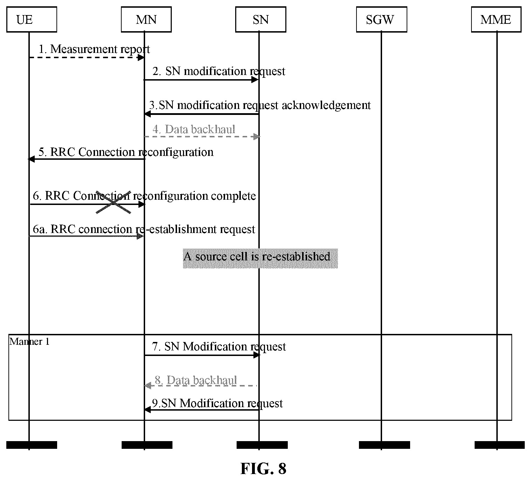

**In** solution 2, backhaul of data is performed in Manner 1 as shown in FIG. 8. The MN transmits a SN modifying message to the SN, to instruct the SN to perform re-backhaul of the received backhaul data to the source MN. Herein, FIG. 8 is a schematic diagram showing a data backhaul flow during a mobility switching process in the MN.

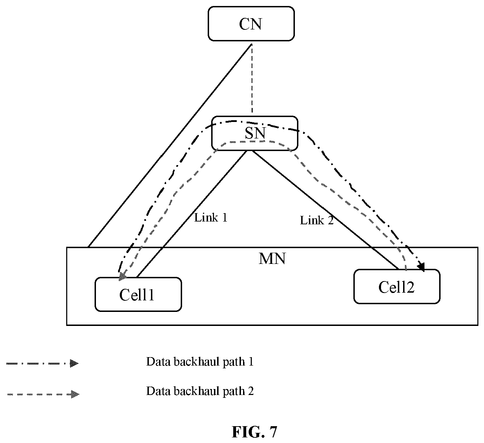

FIG. 7 shows a data backhaul process during a mobility switching process in the MN. Herein, a data backhaul path 1 refers to a data backhaul path from a source side to a target side during switching, and to a data backhaul path upon the switching succeeds. A data backhaul path 2 refers to a data backhaul path from the target side to the source side during switching, and to a data backhaul path upon reconfiguration fails and performs rollback.

A re-establishment process with a switching process between MNs is as follows.

In a scenario of switching between the MNs, during the switching process, backhaul of user data has been performed from a Cell1 (MN1) to a Cell2 (MN2). In a scenario where an air interface service fails, a UE performs, carrying a source PCI, re-establishment to the source side Cell1, because a network side needs to establish a service at the source side. The backhaul data transmitted to the Cell2 has to be retransmitted to the Cell1 to reduce packet losing of the data. Solutions include the following.

In solution 1, not covered by the claims, during a mobility switching process, Cell1(MN1) stores two copies of data When a failure occurs during switching, and re-establishment is performed to the source side, the cached data can be used to restore user service data, without performing backhaul by the target side.

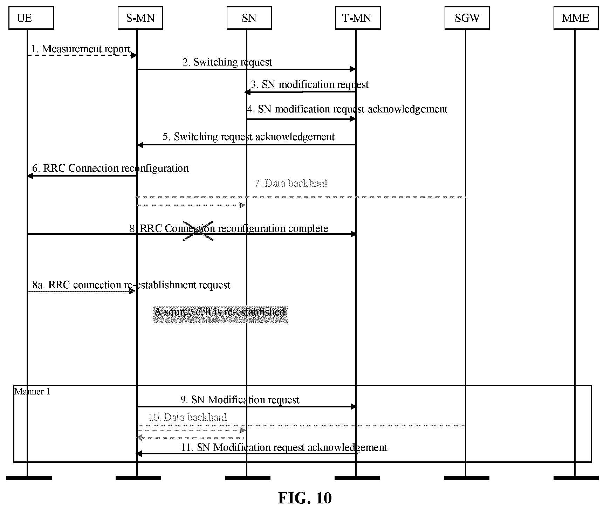

In solution 2, covered by the claims, backhaul of data is performed in a Manner 1 as shown in FIG. 10. The MN transmits a SN modifying message or a similarly equivalent processing message (e.g., a switching request or the like) to the SN, to instruct the SN to perform re-backhaul of the received backhaul data to the source Cell1. Herein, FIG. 10 is a schematic diagram showing a data backhaul flow during a mobility switching process between the MNs.

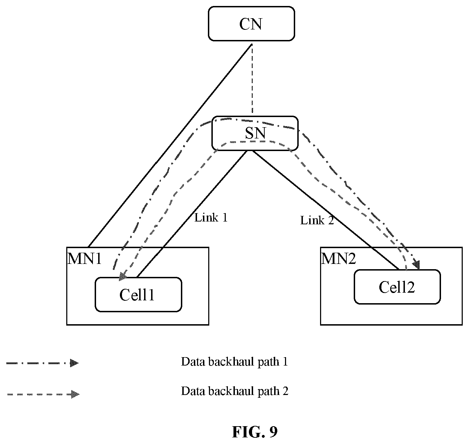

In addition, FIG. 9 shows a data backhaul process during a mobility switching process between the MNs. Herein, a data backhaul path 1 refers to a data backhaul path from a source side to a target side during switching, and to a data backhaul path upon the switching succeeds. A data backhaul path 2 refers to a data backhaul path from the target side to the source side during switching, and to a data backhaul path upon reconfiguration fails and performs rollback.

A re-establishment process with a switching process between a MeNB and an eNB is as follows.

During a switching process from the MeNB to the eNB, backhaul of user data has been performed from a Cell1(MeNB1) to a Cell2(eNB2). In a scenario where an air interface service fails, a UE performs, carrying a source PCI, re-establishment to the source side Cell1, because a network side needs to establish a service at the source side. The backhaul data transmitted to the Cell2 has to be retransmitted to the Cell1 to reduce packet losing of the data. Solutions include the following.

In solution 1, during a mobility switching process, Cell1(MeNB 1) stores two copies of data. When a failure occurs during switching, and re-establishment is performed to the source side, the cached data can be used to restore user service data, without performing backhaul by the target side.

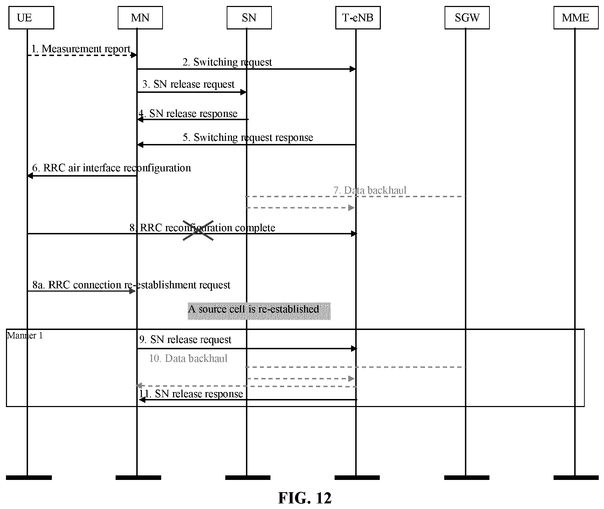

In solution 2, backhaul of data is performed in a Manner 1 as shown in FIG. 12. The MN transmits a SN release message or a similarly equivalent processing message (e.g., a switching request or the like) to the SN, to instruct the SN to perform re-backhaul of the received backhaul data to the source Cell1. Herein, FIG. 12 is a schematic diagram showing a data backhaul flow during a mobility switching process between the MeNB and the eNB. Before switching, the MeNB has triggered an SN release request. An MN notifies the SN of stopping air interface transmission. If the SN carries a backhaul address, the SN performs backhaul of data to the MN. After an air interface triggers a re-establishment flow, the MeNB continues to transmit an SN release request message which carries a new backhaul address. After TeNB receives the message, the TeNB transmits the received backhaul data to the MeNB.

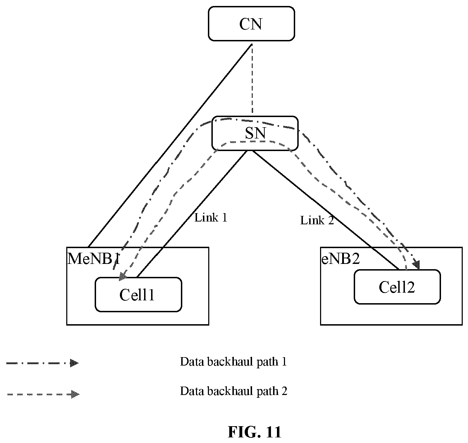

FIG. 11 shows a data backhaul process during a mobility switching process between a MeNB and an eNB. Herein, a data backhaul path 1 refers to a data backhaul path from a source side to a target side during switching, and to a data backhaul path upon the switching succeeds. A data backhaul path 2 refers to a data backhaul path from the target side to the source side during switching, and to a data backhaul path upon reconfiguration fails and performs rollback.

A re-establishment process with a switching process between an eNB and a MeNB is as follows.

During a switching process from the eNB to the MeNB, backhaul of user data has been performed from a Cell1(MeNB1) to a Cell2(eNB2). In a scenario where an air interface service fails, a UE performs, carrying a source PCI, re-establishment to the source side Cell1, because a network side needs to establish a service at the source side. The backhaul data transmitted to the Cell2 has to be retransmitted to the Cell1 to reduce packet losing of the data. Solutions include the following.

In solution 1, during a mobility switching process, Cell1(MeNB) stores two copies of data. When a failure occurs during switching, and re-establishment is performed to the source side, the cached data can be used to restore user service data, without performing backhaul by the target side.

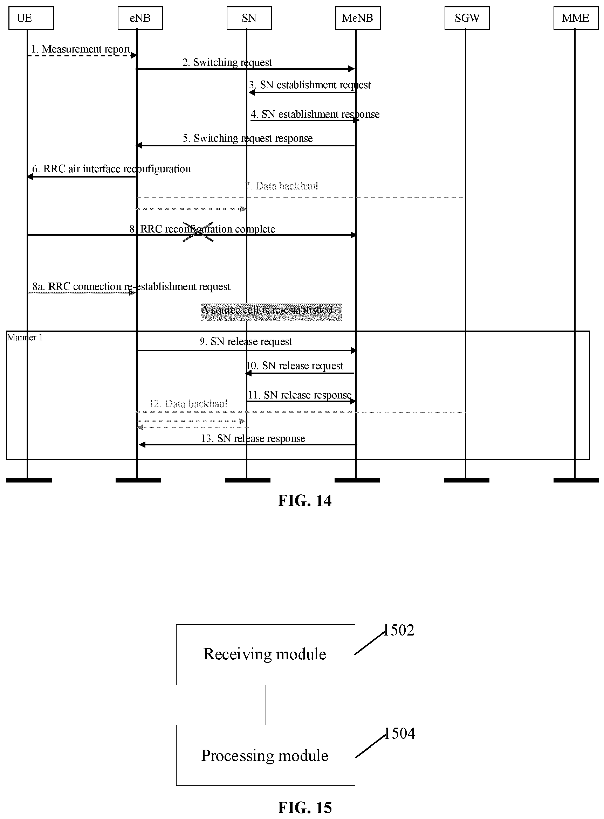

In solution 2, backhaul of data is performed in a Manner 1 as shown in FIG. 14. The MN transmits a SN release message or a similarly equivalent processing message (e.g., a switching request or the like) to the SN, to instruct the SN to perform re-backhaul of the received backhaul data to the source MN. Herein, FIG. 14 is a schematic diagram showing a data backhaul flow during a mobility switching process between the eNB and the MeNB. The eNB triggers a switching request to the MeNB, and the MeNB receives the switching request and initiates a SN release flow. The MeNB notifies the SN of stopping air interface transmission. If the SN carries a backhaul address, the SN performs backhaul of data to the MN. After an air interface triggers a re-establishment flow, the MeNB continues to transmit an SN release request message which carries a new backhaul address. After TeNB receives the message, the TeNB transmits the received backhaul data to the MeNB.

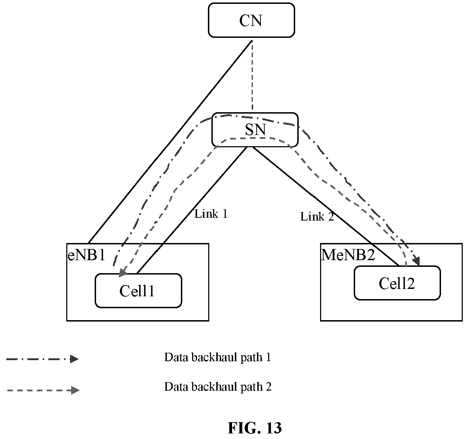

FIG. 13 shows a data backhaul process during a mobility switching process between an eNB and a MeNB. Herein, a data backhaul path 1 refers to a data backhaul path from a source side to a target side during switching, and to a data backhaul path upon the switching succeeds. A data backhaul path 2 refers to a data backhaul path from the target side to the source side during switching, and to a data backhaul path upon reconfiguration fails and performs rollback.

Accordingly, it is provided in this embodiment how to perform data storage, resource rollback, backhaul path identification and data backhaul between a MN and a SN, or even between more linked nodes in a process of re-establishment triggered by a dual connectivity service. Herein, these include but not limited to such scenarios as: mobility switching in a MN without deletion of a SN, mobility switching between MNs without deletion of a SN, and mobility switching between a cell supporting dual connectivity and a cell not supporting dual connectivity, and so on. Specifically, based on switching types, mobility switching in a MN without deletion of a SN includes scenarios of the SN changing and the SN not changing. For example, mobility switching at least includes: mobility switching in a MN without deletion of a SN, mobility switching in a MN with deletion of a SN, mobility switching between MNs without deletion of a SN, and mobility switching between MNs with deletion of a SN. Based on interface (such as X2/Xn and S1/Ng interfaces) classification, mobility switching includes mobility switching between a MN and another MN, and mobility switching between a dual connectivity and a single connectivity (combinations of any two of MeNB/MgNB/Mng-eNB and eNB, gNB and ng-eNB), e.g., mobility switching at least includes: mobility switching from non-stand alone (NSA, especially referring to a network element supporting establishment of dual connectivity) to non-NSA (especially referring to a network element not supporting establishment of dual connectivity), mobility switching from non-NSA to NSA, mobility switching between MNs, and switching of interface type between X2 and S1 interface triggered between NSA and non-NSA.

It shall be noted that this embodiment is applicable to a dual connectivity and carrier aggregation (CA) scenario, a scenario of combination of a dual connectivity and another technology, and a dual connectivity technology under LTE as well as a scenario of combination of this dual connectivity technology with another technology.

Through the description in Embodiment 1, those skilled in the art may clearly know that the method according to the embodiment may be implemented through software and an indispensable general hardware platform, or through hardware. In many cases, software and an indispensable general hardware platform is a preferable implementation. Based on this understanding, the technical solution of the present disclosure that substantially make contribution to the existing technology may be embodied in a form of software product. The computer software product is stored in a storage medium (e.g., an ROM/RAM, a magnetic disc, or an optical disc), includes a number of instructions that enable a terminal device (e.g., a mobile phone, a computer, a server, a network device or the like) to implement methods described in the embodiments of the present disclosure.

### Embodiment 2

An embodiment of the present disclosure provides a data processing apparatus used in dual connectivity re-establishment. The apparatus is configured to implement the above embodiment s and preferable implementations which are not repeated here to avoid duplication. As stated in the following, a term "module" may implemented by combinations of software and/or hardware having predetermined functions. Although the apparatus described in the following embodiment is preferably implemented with software, implementations such as hardware and combination of software and hardware may also be conceived.

FIG. 15 is a structural block diagram showing a data processing apparatus used in dual connectivity re-establishment according to the embodiments of the present disclosure. The apparatus is applied to an SN side. As shown in FIG. 15, the apparatus includes a receiving module 1502 configured to, in response to reconfiguration of an air interface failing and a UE carrying a PCI and re-establishing dual connectivity to a source side MN, receive a request message transmitted by the source side MN. The request message is configured for instructing the SN to perform a re-backhaul of data, which is transmitted to a target side MN by the source side MN through a backhaul, to the source side MN. The apparatus further includes a processing module 1504 coupled to the receiving module 1502 and configured to, in response to the request message, acquire the data from the target side MN, and perform the re-backhaul of the data to the source side MN.

It shall be noted that the application scenario of dual connectivity involved in the present disclosure includes but not limited to EN-DC, NE-DC, NGEN-DC and NR-DC. Alternatively, the dual connectivity may be applied to other fields of a communication system. Herein, E denotes EUTRA, i.e., a 4G radio access network. N denotes NR, i.e., a 5G new radio network. NG denotes a next generation network, supporting linking, on a 5GC side, to a 4G radio access network, i.e., ng-eNB. Therefore, EN-DC refers to a dual connectivity of a 4G radio access network and a 5G NR. NE-DC refers to a dual connectivity of the 5G NR and the 4G radio access network. NGEN-DC refers to a dual connectivity of the 4G radio access network linking to the 5GC core network and the 5G NR. NR-DC refers to a dual connectivity of a 5G radio access network and a 5G radio access network.

In addition, the data involved in the present disclosure is pre-cached data. Herein, the pre-cached data includes data cached between radio access networks and/or data cached between a radio access network and a UE.

Due to the characteristic of radio air interfaces, failure may occur at any time. By storing data in a re-establishment scenario, a rollback in a failure flow can be performed, and a re-backhaul of data can be performed. In this way, interruption in a service on a radio side can be reduced as much as possible. As shown in FIG. 2, data cache includes two aspects: data cache between radio access networks (RAN1->RAN2), and data cache between a radio access network and a UE. The data cache is configured to cache as large quantity of data as possible.

It shall be noted that the RAN1 may be an eNB, a gNB, or a ng-eNB.

It shall be noted that modules described in the above may be implemented through software or hardware. Hardware may be implemented in but not limited to the following manner: the above-mentioned modules being integrated in one processor, or the above-mentioned modules are arranged in different processors in forms of random combinations.

### Embodiment 3

An embodiment of the present disclosure further provides a storage medium storing a computer program. Herein, the computer program, when running, is configured to perform the operations according to any one of the above method embodiments.

Alternatively, in this embodiment, the storage medium may be configured to store a computer program for implementing the following operations.

In S1, in response to reconfiguration of an air interface failing and a UE carrying a source PCI and re-establishing dual connectivity to a source side MN, receiving, by a SN, a request message transmitted by the source side MN. Herein, the request message is configured for instructing the SN to perform a re-backhaul of data, which is transmitted to a target side MN by the source side MN through a backhaul, to the source side MN.

In S2, in response to the request message, acquiring, by the SN, the data from the target side MN, and performing, by the SN, the re-backhaul of the data to the source side MN.

Alternatively, in this embodiment, the storage medium may include but not limited to various media capable of storing computer programs, for example, a U-disk, a read-only memory (ROM), a random access memory (RAM), a mobile hard disc, a magnetic disc or an optical disc, or the like.

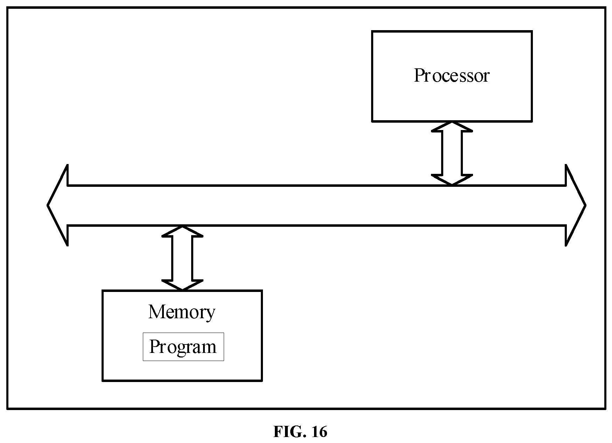

FIG. 16 shows an electronic apparatus according to the embodiment of the present disclosure. The electronic apparatus includes a memory and a processor. Herein, the memory stores a computer program, and the processor is configured to run the computer program to perform the operations according to any one of the above method embodiments.

Alternatively, the electronic apparatus may further include a transmission device and an input output device. Herein, the transmission device is connected with the processor, and the input output device is connected with the processor.

Alternatively, in this embodiment, the processor may be configured to implement the following operations through the computer program.

**In** S1, in response to reconfiguration of an air interface failing and a UE carrying a source **PCI** and re-establishing dual connectivity to a source side MN, receiving, by a SN, a request message transmitted by the source side MN. Herein, the request message is configured for instructing the SN to perform a re-backhaul of data, which is transmitted to a target side MN by the source side MN through a backhaul, to the source side MN.

**In** S2, in response to the request message, acquiring, by the SN, the data from the target side MN, and performing, by the SN, the re-backhaul of the data to the source side MN.

Alternatively, for specific examples in this embodiment, the above embodiments and examples described in the alternative implementations may be referred to and are not repeated here to avoid duplication.

Evidently, those skilled in the art shall understand that the modules or operations in the present disclosure may be implemented through a general computing apparatus. The modules may be integrated in single computing apparatus or may be distributed in a network composed of multiple computing apparatus. Alternatively, the modules or operations may be implemented through program codes executable by the computing apparatus. In this way, the modules or operations may be stored in a storage apparatus and executed by the computing apparatus. In some cases, the operations described may be performed in an order different than stated here. Alternatively, the modules or operations may be made into respective integrated circuit modules, or some modules or operations may be made into a single integrated circuit module. Therefore, the present disclosure is not limited to any particular combination of hardware and software.

The above embodiments are preferable embodiments of the present disclosure, but not intended to limit the present disclosure.

## Claims

1. A data processing method in dual connectivity re-establishment, the method comprising:
in response to reconfiguration of an air interface failing and a user equipment, UE, sending a RRC connection re-establishment to a source side MN by carrying a source physical cell identifier, PCI, and re-establishing dual connectivity to a source side master node, MN, receiving (S102), by a secondary node, SN, a request message transmitted by the source side MN, wherein the request message is configured for instructing the SN to perform a re-backhaul of data, which is transmitted to a target side MN by the source side MN through a backhaul, to the source side MN; and
in response to the request message, acquiring (S104), by the SN, the data from the target side MN, and performing, by the SN, the re-backhaul of the received backhaul data to the source side MN;
wherein reconfiguration of an air interface failing refers to a case that the UE is performing dual connectivity, with the source side MN and the SN, and that during switching from the source side MN to the target side MN, the reconfiguration of the air interface with the target MN fails.

2. A data processing system used in dual connectivity re-establishment, the system comprising: a secondary node, SN, a user equipment, UE; a source side MN and a target side MN, wherein in response to reconfiguration of an air interface failing the UE is configured to send a RRC connection re-establishment to the source side MN by carrying a source physical cell identifier, PCI, and to re-establish dual connectivity to the source side MN, the SN is configured to receive a request message from the source side MN, wherein the request message is configured for instructing the SN to perform a re-backhaul of data, which is transmitted to the target side MN by the source side MN through a backhaul, to the source side MN; and
the SN is configured to, in response to the request message, acquire the data from the target side MN, and perform the re-backhaul of the received backhaul data to the source side MN;
wherein reconfiguration of an air interface failing refers to a case that the UE is configured to perform dual connectivity, with the source side MN and the SN, and that during switching from the source side MN to the target side MN, the reconfiguration of the air interface with the target MN fails.

3. A storage medium storing a computer program, wherein the computer program, when running in a data processing system as defined in claim 2, is configured to perform the method according to claim 1.

## Patentansprüche

1. Datenverarbeitungsverfahren zum Wiederherstellen einer dualen Konnektivität, das Verfahren umfassend:
Senden einer RRC-Verbindungswiederherstellung an einen quellseitigen MN durch ein Übertragen einer physikalischen Zellenkennung, PCI, und Wiederherstellen der dualen Konnektivität zu einem quellseitigen Masterknoten, MN, Empfangen (S102), durch einen sekundären Knoten, SN, einer durch den quellseitigen MN übermittelten Anforderungsnachricht, wobei die Anforderungsnachricht zum Anweisen des SN konfiguriert ist, einen erneuten Backhaul von Daten, die durch den quellseitigen MN über einen Backhaul an einen zielseitigen MN übermittelt werden, an den quellseitigen MN durchzuführen, als Reaktion auf eine fehlgeschlagene Neukonfiguration einer Luftschnittstelle und einer Benutzereinrichtung, UE; und
Erfassen (S104) der Daten von dem zielseitigen MN durch den SN und Durchführen des erneuten Backhauls der empfangenen Backhaul-Daten an den quellseitigen MN durch den SN als Reaktion auf die Anforderungsnachricht;
wobei sich das Fehlschlagen der Neukonfiguration einer Luftschnittstelle auf einen Fall bezieht, dass die UE die duale Konnektivität mit dem quellseitigen MN und dem SN durchführt und dass während eines Umschaltens von dem quellseitigen MN zu dem zielseitigen MN die Neukonfiguration der Luftschnittstelle mit dem zielseitigen MN fehlschlägt.

2. Datenverarbeitungssystem, das zum Wiederherstellen der dualen Konnektivität verwendet wird, das System umfassend: einen sekundären Knoten, SN, eine Benutzereinrichtung, UE; einen quellseitigen MN und einen zielseitigen MN, wobei
die UE konfiguriert ist, um eine RRC-Verbindungswiederherstellung an den quellseitigen MN zu senden, durch Übertragen einer physikalischen Zellenkennung, PCI, und um die duale Konnektivität mit dem quellseitigen MN wiederherzustellen, wobei der SN konfiguriert ist, um eine Anforderungsnachricht von dem quellseitigen MN zu empfangen, wobei die Anforderungsnachricht zum Anweisen des SN konfiguriert ist, einen erneuten Backhaul von Daten, die durch den quellseitigen MN über einen Backhaul an den zielseitigen MN übermittelt werden, an den quellseitigen MN durchzuführen; und
der SN konfiguriert ist, um als Reaktion auf die Anforderungsnachricht die Daten von dem zielseitigen MN abzurufen und den erneuten Backhaul der empfangenen Backhaul-Daten zu dem quellseitigen MN durchzuführen;
wobei sich die fehlgeschlagene Neukonfiguration einer Luftschnittstelle auf einen Fall bezieht, in dem die UE konfiguriert ist, um die duale Konnektivität mit dem quellseitigen MN und dem SN durchzuführen und in dem während des Umschaltens von dem quellseitigen MN zu dem zielseitigen MN die Neukonfiguration der Luftschnittstelle mit dem zielseitigen MN fehlschlägt.

3. Speichermedium, auf dem ein Computerprogramm gespeichert ist, wobei das Computerprogramm konfiguriert ist, um das Verfahren nach Anspruch 1 durchzuführen., wenn es in einem Datenverarbeitungssystem wie in Anspruch 2 vorgegeben ausgeführt wird.

## Revendications

1. Procédé de traitement de données dans un rétablissement de double connectivité, le procédé comprenant :
en réponse à l'échec de reconfiguration d'interface radio et de l'envoi par un équipement utilisateur, UE, d'un rétablissement de connexion RRC à un MN côté source en transportant un identificateur de cellule physique, PCI, source et du rétablissement d'une double connectivité avec un nœud maître, MN, côté source, la réception (S102), par un nœud secondaire, SN, d'un message de demande transmis par le MN côté source, dans lequel le message de demande est configuré pour ordonner au SN de réaliser une nouvelle liaison terrestre de retour des données, qui sont transmises à un MN côté cible par le MN côté source par l'intermédiaire d'une liaison terrestre de retour, vers le MN côté source ; et
en réponse au message de demande, l'acquisition (S104), par le SN, des données provenant du MN côté cible, et la réalisation, par le SN, de la nouvelle liaison terrestre des données de liaison terrestre de retour reçues vers le MN côté source ;
dans lequel l'échec de reconfiguration d'une interface radio fait référence à un cas où l'UE réalise une double connectivité, avec le MN côté source et le SN, et où, lors de la commutation du MN côté source au MN côté cible, la reconfiguration de l'interface radio avec le MN cible échoue.

2. Système de traitement de données utilisé dans le rétablissement de double connectivité, le système comprenant : un nœud secondaire, SN, un équipement utilisateur, UE ; un MN côté source et un MN côté cible, dans lequel
en réponse à l'échec de reconfiguration d'une interface radio, l'UE est configuré pour envoyer un rétablissement de connexion RRC au MN côté source en transportant un identificateur de cellule physique, PCI, source et pour rétablir la double connectivité avec le MN côté source, le SN est configuré pour recevoir un message de demande du MN côté source, dans lequel le message de demande est configuré pour ordonner au SN de réaliser une nouvelle liaison terrestre de retour de données, qui sont transmises au MN côté cible par le MN côté source par l'intermédiaire d'une liaison terrestre de retour, vers le MN côté source ; et
le SN est configuré pour, en réponse au message de demande, acquérir les données du MN côté cible et réaliser la nouvelle liaison terrestre de retour des données de liaison terrestre de retour reçues vers le MN côté source ;
dans lequel l'échec de reconfiguration d'une interface radio fait référence à un cas où l'UE est configuré pour réaliser une double connectivité, avec le MN côté source et le SN, et où, lors de la commutation du MN côté source au MN côté cible, la reconfiguration de l'interface radio avec le MN cible échoue.

3. Support de stockage stockant un programme informatique, dans lequel le programme informatique, lorsqu'il est exécuté dans un système de traitement de données tel que défini dans la revendication 2, est configuré pour réaliser le procédé selon la revendication 1.
